# EUROPÄISCHE PATENTSCHRIFT

(11) **EP 1 109 683 B1**
(45) Veröffentlichungstag und Bekanntmachung des Hinweises auf die Patenterteilung: **12.06.2002**
(21) Anmeldenummer: 99944152.0
(22) Anmeldetag: 10.09.1999
(51) Int. Cl.: B60C 23/00

(54) **RADEINHEIT FÜR EIN KRAFTFAHRZEUG MIT REIFENFÜLLANLAGE**
AUTOMOBILE WHEEL UNIT WITH TIRE INFLATION SYSTEM
UNITE DE ROUE POUR VEHICULE AVEC SYSTEME DE GONFLAGE DES PNEUMATIQUES

(30) Priorität: 11.09.1998 AT 60198
(43) Veröffentlichungstag der Anmeldung: 27.06.2001
(73) Patentinhaber: Steyr-Daimler-Puch Spezialfahrzeug AG & Co. KG, 1111 Wien (AT); Volkswagen Aktiengesellschaft, 38436 Wolfsburg (DE)
(72) Erfinder: SKOFF, Gerhard, A-1130 Wien (AT); CHRISTELY, Heinz, A-2125 Neubau (AT); STRASSER, Alfred, A-7203 Wiesen (AT); KRAUSS, Andreas, D-38551 Ribbesbüttel (DE)
(74) Vertreter: Rippel, Andreas, Dipl.-Ing.
(86) Internationale Anmeldenummer: AT9900221
(87) Internationale Veröffentlichungsnummer: WO0015450

(56) Entgegenhaltungen:
- EP-A- 0 265 296
- DE-C- 4 108 337
- US-A- 3 978 448

## Beschreibung

Die Erfindung handelt von einer Radeinheit für ein Kraftfahrzeug mit Reifenfüllanlage, bestehend aus einer in einem Radträger drehbar gelagerten Nabe und einem in Axialrichtung abziehbaren Rad, wobei die Nabe über eine Dreheintragung an eine Reifenfüllanlage angeschlossen und mit dem Rad über einander überlappende axiale Bohrungen in Nabe und Rad strömungsverbunden ist, und wobei die axiale Bohrung im Rad in eine ein Verschlußstück enthaltende Kammer mündet, und eine Feder vorgesehen ist, die das Verschlußstück in Richtung auf die Mündung der axialen Bohrung des Rads belastet.

Eine solche gattungsgemäße Radeinheit ist aus der EP-A- 0 265 296 bekannt.

Weiterhin ist aus der DE-C-41 08 337 eine Radeinheit für ein Kraftfahrzeug mit einer Vorrichtung zur Überwachung des Reifendrucks bekannt, die aus einer in einem Radträger drehbar gelagerten Nabe und einem in Axialrichtung abziehbaren Rad besteht, wobei die Nabe mit dem Rad über einander überlappende Bohrungen in Nabe und Rad strömungsverbunden ist, und die axiale Bohrung im Rad in eine Kammer mündet und ein Rückschlagventil mit einem stiftförmigen Fortsatz enthält. In der axialen Bohrung im Rad ist weiterhin ein Druckgebers mit zylindrischem Gehäuse verschiebbar geführt, welches zur Kammer eine axiale Öffnungen aufweist. In der axialen Bohrung des Rads ist ein Dichtring eingesetzt, der am zylindrischen Gehäuse des Drucknehmers anliegt.
Im Fall des montierten Reifens wird das Rückschlagventil offengehalten, indem ein axialer Fortsatz des Druckgebers gegen den stiftförmigen Fortsatz des Rückschlagventils drückt, und so einen Schließkörper des Rückschlagventils von seinem Ventilsitz abhebt.

Derartige Reifenfüllanlagen dienen der Verstellung des Luftdruckes im Reifen. Die dazu erforderliche Strömungsverbindung zwischen der Nabe und dem abnehmbaren Rad erfolgt über die überlappenden axialen Bohrungen. Um zu verhindern, daß beim Abnehmen des Rades die Luft aus dem Rad entweicht, ist es bei Radpanzem aus der Praxis bekannt, ein Verschlußstück vorzusehen, das vor Abnehmen des Rades gegen die Mündung dessen axialer Bohrung geschraubt wird. Das ist unpraktisch und wird leicht vergessen.

Es ist Ziel der Erfindung, eine Strömungverbindung zwischen Nabe und Rad vorzuschlagen, die sich bei Abnehmen des Rades selbsttätig so schließt, daß kein Druckverlust auftritt, auch nicht kurzzeitig.

Erfindungsgemäß wird das durch die kennzeichnenden Merkmale des Anspruchs 1 erreicht, die vorsehen, daß
a) in der axialen Bohrung im Rad ein Rohrstück verschiebbar geführt ist, das im Inneren der Kammer seitliche Öffnungen aufweist, und
b) in die axiale Bohrung im Rad ein Dichtring eingesetzt ist, der am Rohrstück anliegt.

Das Verschlußstück bildet ein federbelastetes Ventil, das durch den in der Kammer herrschenden Druck dicht verschlossen wird. Ist das Rad mit der Nabe verbunden, so drückt das Rohrstück gemäß a) das Verschlußstück in die geöffnete Stellung und dessen seitliche Öffnungen sorgen dafür, daß die Strömungsverbindung zwischen Rad und Nabe intakt bleibt. Der Dichtring nach b) stellt sicher , daß kein Druckverlust auftritt.

In einer bevorzugten Weiterbildung der Erfindung ist die Entfernung des Dichtringes von der Mündung der axialen Bohrung im Rad größer als die achsiale Erstreckung der seitlichen Öffnungen des Rohrstückes ist. Damit wird erreicht, daß beim Abnehmen des Rades, wenn das Rohrstück in der axialen Bohrung des Rades verschoben wird und die seitlichen Öffnungen in die axiale Bohrung eintauchen, letztere den Dichtring nicht unterlaufen. Dadurch ist auch während des Abnehmens des Rades sichergestellt, daß überhaupt keine Luft aus dem Rad ins Freie entweicht.

In einer möglichen Ausführungsform ist das Rohrstück mit der Nabe fest verbunden. In einer alternativen möglichen Ausführungsform ist das Rohrstück mit dem Verschlußstück fest verbunden oder einstückig.
Im Folgenden wird die Erfindung anhand von Abbildungen beschrieben und erläutert. Es stellen dar:
- Fig.1:: Einen teilweisen Axialschnitt durch eine erfindungsgemäße Radeinheit,
- Fig.2:: Detail A in Fig. 1, vergrößert,
- Fig.3:: Detail A in Fig. 1 in einer alternativen Ausführungsform, vergrößert.

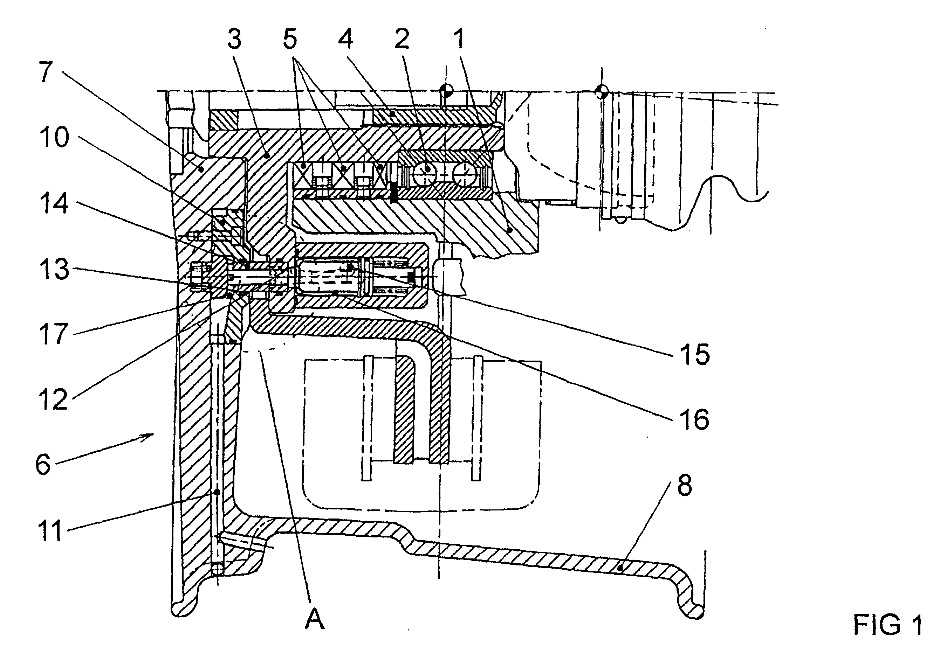

In Fig. 1 ist der Radträger 1 nur angedeutet. Er umfaßt das Radlager 2, in dem eine Nabe 3 drehbar gelagert und von einer Antriebswelle 4 angetrieben ist. Zwischen Radträger 1 und Nabe 3 sind eine Anzahl Dichtringe eingesetzt, die eine Dreheintragung 5 bilden. An der Nabe ist in bekannter Weise ein Rad 6 befestigt, das aus einer Radscheibe und einer Felge 8 besteht. Die Radmuttern, mit denen das Rad befestigt ist und der auf die Felge aufgezogene Reifen sind nicht dargestellt.

Die Radscheibe 7 enthält innen ein Einsatzstück 10, aus Gründen der Zerlegbarkeit; die in ihm vorgesehenen Organe könnten auch in der Radscheibe 7 selbst untergebracht sein. Weiters enthält die Radscheibe einen zur Felge 8 führenden Luftkanal 11. In der Nabe 3 ist mindestens eine achsiale Bohrung 12 vorgesehen und in deren Verlängerung bzw. zumindest überlappend eine weitere achsiale Bohrung 13 im Rad, hier im Einsatzstück 10. Diese beiden achsialen Bohrungen 12,13 sind durch ein Rohrstück 14 verbunden. Die Luftzu- bzw. abfuhr von der im Fahrzeug untergebrachten Reifenfüllanlage führt vom Radträger in die zwischen den Dichtungen gebildeten Kammern der Dreheintragung 5, von diesen über ein nicht dargestelltes an der Nabe 3 befestigtes Steuerventil, über eine am Gehäuse des Filters 16 angebrachte Öffnung 15 durch das Filter 16, die achsiale Bohrung 12 in der Nabe das Rohrstück 14, die achsiale Bohrung 13 im Rad in eine Kammer 17 im Einsatzstück 10 und schließlich durch den Luftkanal 11 zur Felge 8.

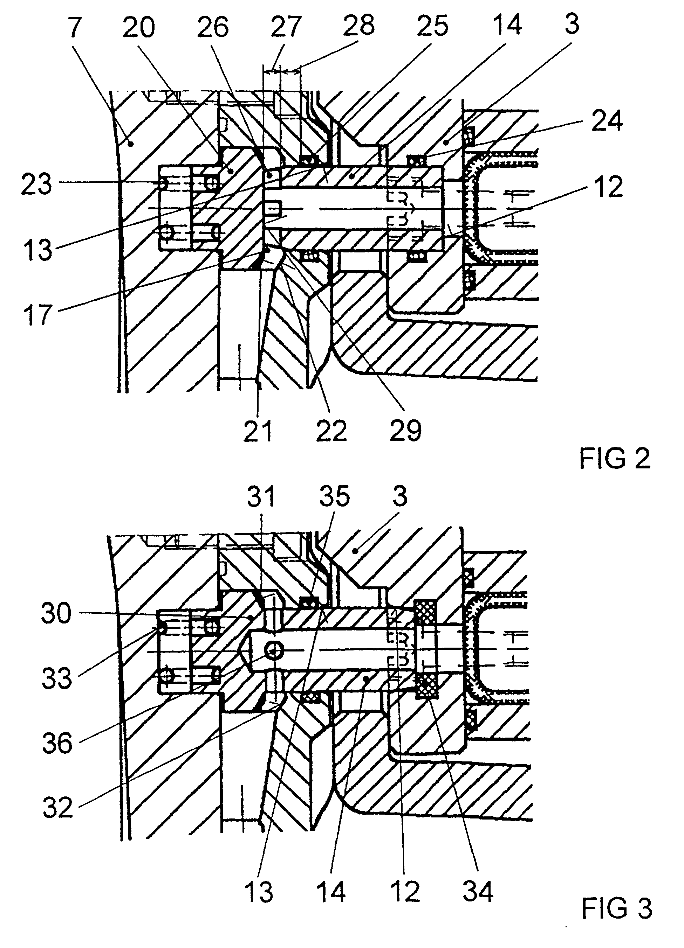

Fig. 2 zeigt die Strömungsverbindung zwischen Nabe 3 und Rad 6 im Detail in einer ersten Ausführungsform. Ein Verschlußstück 20 in Form eines kreissymmetrischen Stempels besitzt an seiner Stirn eine leicht konische Dichtfläche 21, die bei abmontiertem Rad mit einer Gegenfläche 22 an der Mündung der achsialen Bohrung 13 in die Kammer 17 zusammenwirkt. Das Verschlußstück wird von einer Feder 23 in Schließrichtung beaufschlagt. Das Rohrstück 14 steckt mit einem Ende fest in der Nabe 3 bzw. in deren achsialer Bohrung 12. Zusätzlich kann noch eine Dichtung 24 vorgesehen sein, soferne das Rohrstück nicht überhaupt mit der Nabe einstückig ist. Zwischen dem Rohrstück 14 und der achsialen Bohrung 13 im Rad ist ein Dichtring 25 vorgesehen. Das Rohrstück 14 weist an seinem dem Verschlußstück 20 zugekehrten Ende seitliche Öffnungen 26 auf, die auch bei dessen Anliegen an der Stirnfläche 29 des Verschlußstückes 20 für eine Strömungsverbindung sorgen. Die Erstreckung dieser Öffnungen 26 in Achsialrichtung ist mit 27 bezeichnet, sie ist kleiner als die Entfernung 28 zwischen der Mündung 22 und dem Beginn des Dichtringes 25. Dadurch ist sichergestellt, daß beim Abnehmen des Rades - wobei das Rohrstück 14 aus der Bohrung 13 im Rad herausgezogen wird, die Abdichtung zwischen Rohrstück 14 und Bohrung 13 solange erhalten bleibt, bis die Dichtfläche 21 auf der Mündung 22 aufsitzt. Es gibt also beim Abziehen des Rades nicht einmal einen Moment, in dem Luft aus dem Rad entweichen könnte.

In Fig.3 tragen die Gleichteile die gleichen Bezugszeichen. Das Verschlußstück 30 ist hier einstückig mit dem Rohrstück 14 ausgeführt. Somit wird beim Abziehen des Rades das Rohrstück 14 aus der Bohrung 12 der Nabe 3 herausgezogen. Das Verschlußstück 30 bildet am Übergang zum Rohrstück 14 eine Schulter 31, die wieder bezüglich der Mündung der Bohrung 13 eine Dichtfläche ist. Die Feder 33 drückt das ganze Verschlußstück 30 gegen eine Dichtung 34 in der Nabe 3. Zwischen dem Rohrstück 14 und der Bohrung 13 ist wieder ein Dichtring 35 vorgesehen, dessen Abstand von der Mündung 32 auch wieder größer als der Durchmesser der Bohrungen 36 ist, von denen hier beispielsweise vier anstelle der seitlichen Öffnungen treten.

## Patentansprüche

1. Radeinheit für ein Kraftfahrzeug mit Reifenfüllanlage, bestehend aus einer in einem Radträger drehbar gelagerten Nabe (3) und einem in Axialrichtung abziehbaren Rad (6), wobei die Nabe über eine Dreheintragung (5) an eine Reifenfüllanlage angeschlossen und mit dem Rad über einander überlappende axiale Bohrungen (12,13) in Nabe und Rad strömungsverbunden ist, und wobei die axiale Bohrung (13) im Rad in eine ein Verschlußstück (20;30) enthaltende Kammer (17) mündet, und
eine Feder (23;33) vorgesehen ist, die das Verschlußstück (20;30) in Richtung auf die Mündung (22;32) der axialen Bohrung (13) belastet, **dadurch gekennzeichnet, daß**
a) in der axialen Bohrung (13) im Rad ein Rohrstück (14) verschiebbar geführt ist, das im Inneren der Kammer (17) seitliche Öffnungen (26;36) aufweist, und
b) in die axiale Bohrung (13) im Rad ein Dichtring (25;35) eingesetzt ist, der am Rohrstück (14) anliegt.

2. Radeinheit nach Anspruch 1, **dadurch gekennzeichnet, daß** die Entfernung (28) des Dichtringes von der Mündung (22;32) der axialen Bohrung (13) im Rad größer als die achsiale Erstreckung (27) der seitlichen Öffnungen (26;36) des Rohrstückes (14) ist.

3. Radeinheit nach Anspruch 1, **dadurch gekennzeichnet, daß** das Rohrstück (14) mit der Nabe (3) fest verbunden ist.

4. Radeinheit nach Anspruch 1, **dadurch gekennzeichnet, daß** das Rohrstück (14) mit dem Verschlußstück (30) fest verbunden oder einstückig ist.

## Claims

1. An automobile wheel unit with a tire inflating system consisting of a hub (3) rotatably mounted in a wheel carrier and a wheel (6) that can be removed in the axial direction, whereby the hub is connected via a rotational drive means (5) to a wheel inflating system, and there is an air connection to the wheel via overlapping axial holes (12, 13) in the hub and wheel, and the axial hole (13) in the wheel terminates in a chamber (17) containing a seal (20; 30), **characterized in that**:
a) a spring (23; 33) is provided that presses the seal (20; 30) toward the mouth (22; 32) of the axial hole (13),
b) a moveable tube piece (14) is in the axial hole (13) in the wheel that has side openings (26; 36) inside the chamber (17), and
c) a sealing ring (25; 35) that contacts the tube piece (14) is inserted in the axial hole (13) in the wheel.

2. The wheel unit according to claim 1, **characterized in that** the distance (28) of the sealing ring from the mouth (22; 32) of the axial hole (13) in the wheel is greater than the axial extension (27) of the side openings (26; 36) of the tube piece (14).

3. The wheel unit according to claim 1, **characterized in that** the tube piece (14) is fixed to the hub (3).

4. The wheel unit according to claim 1, **characterized in that** the tube piece (14) is connected to the seal (30) or forms a single piece with it.

## Revendications

1. Unité de roue pour véhicule automobile avec installation de gonflage de pneus, consistant en un moyeu (3) assis de manière à pouvoir pivoter dans un support de roue et en une roue (6) pouvant être retirée dans le sens axial, le moyeu étant connecté, par l'intermédiaire d'un insert rotatif (5) à une installation de gonflage de pneus et relié en fonction du courant par l'intermédiaire d'alésages axiaux se chevauchant (12, 13) dans le moyeu et la roue et l'alésage axial (13) de la roue débouchant dans une chambre (17) contenant une pièce de fermeture (20 ; 30), **caractérisée en ce que**
a) un ressort (23 ;33) qui charge la pièce de fermeture (20 ; 30) dans le sens allant vers l'embouchure (22 ; 32) de l'alésage axial (13) est prévu,
b) dans l'alésage axial (13) de la roue une pièce tubulaire (14) est introduite de manière à pouvoir se déplacer, que la chambre (17) présente à l'intérieur des ouvertures latérales (26 ; 36) et
c) dans l'alésage axial (13) de la roue, une bague d'étanchéité (25 ; 35) qui repose sur la pièce tubulaire (14), est insérée.

2. Unité de roue selon la revendication 1, **caractérisée en ce que** la distance (28) de la bague d'étanchéité de l'embouchure (22 ; 32) de l'alésage axial (13) de la roue est supérieure à l'extension axiale (27) des ouvertures latérales (26 ; 36) de la pièce tubulaire (14).

3. Unité de roue selon la revendication 1, **caractérisée en ce que** la pièce tubulaire (14) est reliée de manière fixe au moyeu (3).

4. Unité de roue selon la revendication 1, **caractérisée en ce que** la pièce tubulaire (14) est reliée de manière fixe à la pièce de fermeture (30) ou est en une seule pièce.
